# EUROPÄISCHE PATENTSCHRIFT

(11) **EP 0 635 412 B1**
(45) Veröffentlichungstag und Bekanntmachung des Hinweises auf die Patenterteilung: **04.09.1996**
(21) Anmeldenummer: 94108925.2
(22) Anmeldetag: 10.06.1994
(51) Int. Cl.: B60S 1/50, B60R 3/00

(54) **Einstieg zum Fahrerhaus eines Lastkraftwagens mit integriertem Vorratsbehälter für eine Reinigungsflüssigkeit**
Entry step for the cab of a goods vehicle, with integrated washer fluid reservoir
Marche pour monter dans la cabine d'un camion, avec réservoir intégré pour un liquide de nettoyage

(30) Priorität: 22.07.1993 AT 1455/93
(43) Veröffentlichungstag der Anmeldung: 25.01.1995
(73) Patentinhaber: STEYR NUTZFAHRZEUGE AG, A-4400 Steyr (AT)
(72) Erfinder: Schönegger-Fösleitner, Erich, A-4400 Steyr (AT); Kraus, Wolfgang, Prof. Dipl.-Designer, D-80997 München (DE)

(56) Entgegenhaltungen:
- DE-A- 3 938 922
- DE-A- 4 006 418
- US-A- 1 998 387
- US-A- 3 343 703
- US-A- 4 836 568

## Beschreibung

Die Erfindung betrifft einen Einstieg zum Fahrerhaus eines Lastkraftwagens mit integriertem Vorratsbehälter für eine zur Windschutzscheiben- und/oder Scheinwerfer-Reinigung dienende Flüssigkeit.

Die Erfindung geht aus von einer Einstieg-Ausgestaltung mit integriertem Vorratsbehälter für Reinigungsflüssigkeit wie an Serien-Lastkraftwagen der Anmelderin realisiert. Dabei ist der Vorratsbehälter direkt in eine Trittstufe des Einstiegkastens integriert. Die Einfüllöffnung liegt dabei im vorderen Bereich der Auftrittfläche der Trittstufe, um deren Fuktion nicht wesentlich zu beschränken. Diese Anordnung ist vergleichsweise kompliziert und insofern von Nachteil, weil sie einen speziellen Verschluß der Einfüllöffnung bedingt, damit der beim Kippen des Fahrerhauses mit dem Einstieg mitgekippte Vorratsbehälter dicht bleibt. Außerdem ist wegen der in der Ebene der Trittfläche der Trittstufe gegebenen Verschlußeinrichtung des Vorratsbehälters deren Beschädigung durch oftmaliges Betreten nicht vollständig auszuschließen.

Es ist daher Aufgabe der Erfindung, den Vorratsbehälter in günstigerer Weise in den Einstieg und so zu integrieren, daß die Gefahr von Beschädigungen des Vorratsbehälters weitgehend vermeidbar ist, dieser für Füllvorgänge gut zugänglich ist und die eigentliche Funktion des Einstieges als Trittorgan für eine einsteigende Person voll erhalten bleibt.

Diese Aufgabe ist erfindungsgemäß dadurch gelöst, daß der Vorratsbehälter stehend oberhalb einer Trittstufe im Einstiegkasten, zumindest größtenteils dessen Rückwand bildend, eingebaut und dessen weit nach hinten zur Einstiegkasten-Seitenwand hin an höchster Stelle durch einen einfachen Deckel verschließbare Füllöffnung von der Außenseite des Einstieges her für Füllvorgänge zugänglich angeordnet ist.

Vorzugsweise ragt der Vorratsbehälter in Einbaulage zumindest teilweise in eine zur Fahrzeugmitte hin gerichtete Ausbuchtung der Einstiegkasten-Rückwand hinein und ist mit einem Teil seiner Unterseite formschlüssig an der Bodenfläche der Ausbuchtung, welche mit deren Rückwand einen stumpfen Winkel von etwa 60 bis 80° einschließt, abgestützt. Darüber hinaus ist der Vorratsbehälter mit seiner - in Fahrtrichtung vorwärts gesehen - rückwärtigen Seitenwand vorzugsweise etwa parallel verlaufend zur hinteren Seitenwand des Einstieges, an dieser angrenzend abgestützt. Damit ein genügend großer, im Querschnitt etwa trapezförmiger Raum für das Einführen der Spitze eines Schuhs einer den Einstieg betretenden Person verbleibt, ist zwischen Trittstufe des Einstiegkastens und Bodenfläche der Ausbuchtung ein verbindender Vertikalabschnitt entsprechender Höhe gegeben und außerdem der aus der Ausbuchtung herausragende Teil der Vorratsbehälter-Unterseite schräg nach außen oben gerichtet.

Der Vorratsbehälter kann an seiner der Außenseite des Einstieges zugewandten Außenwand mit einer Füllstandsanzeige ausgebildet oder ausgestattet sein, anhand welcher der aktuelle Flüssigkeitspegel permanent von der Außenseite des Einstieges her erkennbar ist.

In bevorzugter Ausführung weist die Rückwand des Vorratsbehälters außerdem eine Einbuchtung auf, in der eine die Reinigungsflüssigkeit zu den Reinigungsstellen am Fahrzeug fördernde elektrische Pumpe eingebaut ist.

Die erfindungsgemäße Anordnung des Vorratsbehälters bringt eine Reihe von Vorteilen. So nützt sie einen im Einstieg zu Lkw-Fahrerhäusern in der Regel freien, normalerweise ungenutzten Raum aus und erlaubt eine im Hinblick auf das Kippen des Fahrerhauses und den Befüllvorgang optimale Anordnung des Einfüllstutzens. Aufgrund der vorgesehenen Füllstandskontrolle ist jederzeit von außen der aktuelle Füllstand im Einstiegskasten erkennbar, so daß ein notwendiges Nachfüllen des Vorratsbehälters rechtzeitig durchgeführt werden kann. Da im Einstiegkasten in der Regel auch eine Beleuchtung vorhanden ist, ist eine Nachfüllung des Vorratsbehälters auch bei Dunkelheit problemlos möglich.

Nachstehend ist die erfindungsgemäße Lösung anhand eines in der Zeichnung dargestellten Ausführungsbeispieles noch näher erläutert. In der Zeichnung zeigen:

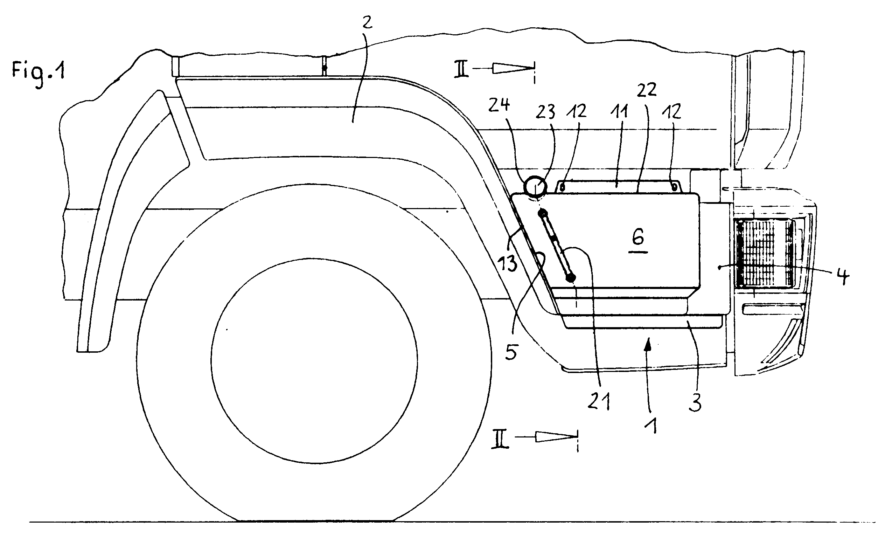

- Fig. 1: in Seitenansicht einen für das Verständnis der Erfindung repräsentativen Ausschnitt eines Lastkraftwagens, und

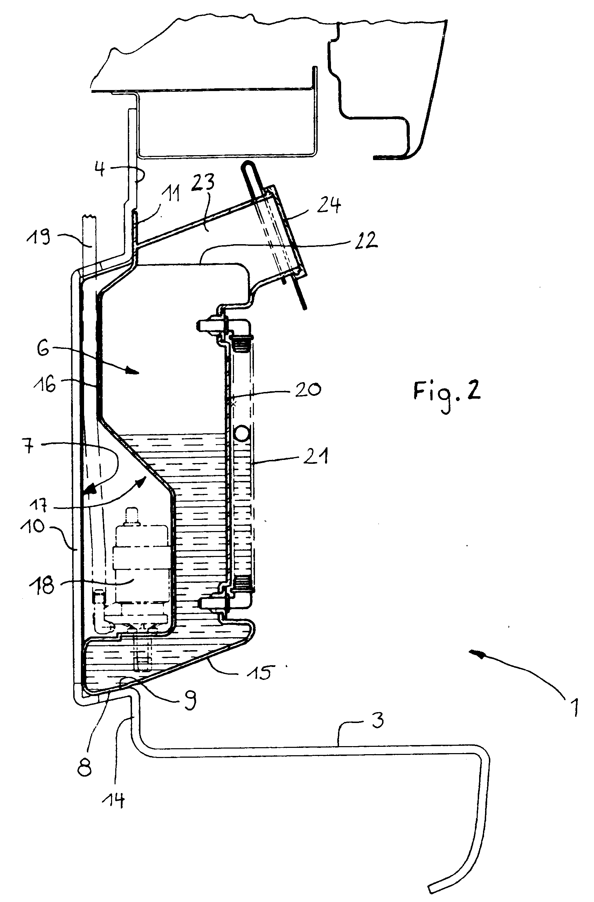

- Fig. 2: einen vergrößerten Schnitt durch die Darstellung gemäß Fig. 1 entlang der dort eingezeichneten Schnittlinie 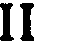 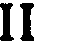 - 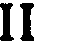 .

In der Zeichnung ist der Einstieg zum Fahrerhaus eines Lastkraftwagens mit 1 bezeichnet. Der diesbezügliche Einstiegkasten kann, wie dargestellt, muß jedoch nicht notwendigerweise mit einem Teil 2 eines Vorderradkotflügels vereinigt sein. Der Einstiegkasten ist im dargestellten Beispiel nach unten durch eine Trittstufe 3, nach innen durch eine Rückwand 4 und nach hinten durch eine Seitenwand 5 begrenzt, welch letztere Bestandteil des Vorderradkotflügel-Teils 2 sein kann.

In diesen solchermaßen gegebenen Einstiegkasten ist ein Vorratsbehälter 6 für eine zur Windschutzscheiben- und/oder Scheinwerfer-Reinigung dienende Flüssigkeit in erfindungsgemäßer Weise integriert. Dabei ist der Vorratsbehälter 6 stehend oberhalb der Trittstufe 3 im Einstiegkasten, zumindest größtenteils dessen Rückwand bildend, eingebaut. Die Rückwand 4 des Einstiegkastens weist eine zur Fahrzeugmitte hin gerichtete Ausbuchtung 7 auf, in die der Vorratsbehälter 6 in Einbaulage zumindest teilweise hineinragt. Innerhalb dieser Ausbuchtung 7 ist der Vorratsbehälter 6 mit einem Teil 8 seiner Unterseite formschlüssig an der Bodenfläche 9 abgestützt, wobei letztere mit der Rückwand 10 der Ausbuchtung 7 einen stumpfen Winkel von etwa 60 bis 80° einschließt. Hierdurch ist der Vorratsbehälter 6 in Einbaulage untenseitig formmäßig so übergriffen, daß er dort ohne Befestigungsmittel lagefixiert ist. Für seine Befestigung ist obenseitig am Vorratsbehälter 6 ein Flansch 11 gegeben, der außerhalb der Ausbuchtung 7 an der Rückwand 4 des Einstieges anliegt und dort mittels Schrauben 12 festgeschraubt ist. Um eine auch in Fahrtrichtung sichere Anordnung des Vorratsbehälters 6 zu gewährleisten, ist dieser mit seiner rückwärtigen Seitenwand 13 etwa parallel verlaufend zur hinteren Seitenwand 5 des Einstiegkastens, an dieser angrenzend, abgestützt.

Um die eigentliche Funktion des Einstieges, nämlich das Betreten des Fahrerhauses über die Trittstufe 3 sicherzustellen, kann die Ausbuchtung 7 in der Rückwand 4 so tief ausgebildet sein, daß der Vorratsbehälter 6 vollständig oder zumindest nahezu vollständig innerhalb dieser angeordnet ist. Im dargestellten Ausführungsbeispiel ist jedoch eine andere, mehr Bauraum im Bereich hinter dem Einstiegkasten freilassende Lösung aufgezeigt. Dabei ist zwischen Trittstufe 3 des Einstiegkastens und der Bodenfläche 9 der Ausbuchtung 7 ein verbindender Vertikalabschnitt 14 der Rückwand 4 mit solcher Höhe gegeben und außerdem ist der aus der Ausbuchtung 7 herausragende freie Teil 15 der Vorratsbehälter-Unterseite so schräg nach oben außen gerichtet, daß ein genügend großer, im Querschnitt trapezförmiger Raum für das Einführen der Spitze eines Schuhs einer den Einstieg betretenden Person vorhanden ist.

Vorzugsweise ist die die Reinigungsflüssigkeit zu den Reinigungsstellen am Fahrzeug fördernde elektrische Pumpe mit dem Vorratsbehälter 6 integral vereinigt. Hierzu ist in der Rückwand 16 des Vorratsbehälters 6 eine Einbuchtung 17 ausgebildet, in die die Pumpe 18 eingebaut ist. Die von dieser zu den Reinigungsstellen am Fahrzeug führende Leitung ist in der Zeichnung mit 19 angezogen.

Der Vorratsbehälter 6 ist an seiner der Außenseite des Einstieges zugewandten Außenwand 20 mit einer Füllstandsanzeige 21 ausgestattet. Diese kann auf verschiedene Weise realisiert sein, beispielsweise durch ein unmittelbar in der Außenwand 20 gegebenes Schauglas oder einen dort transparenten Bereich oder wie dargestellt, durch ein außen flüssigkeitsdicht anmontiertes Steigrohr mit Schwimmer.

An der Oberseite 22 des Vorratsbehälters 6 ist ein schräg nach oben zur Außenseite des Einstieges hin gerichteter Füllstutzen 23 angeordnet, dessen an höchster Stelle gegebene Füllöffnung durch einen einfachen, unverlierbar befestigten und für Füllvorgänge abnehmbaren Deckel 24 verschlossen ist. Hierdurch ist der Vorratsbehälter 6 für Füllvorgänge gut von der Außenseite des Einstieges her zugänglich. Für die Füllöffnung am Füllstutzen bzw. Vorratsbehälter 6 ist eine solche Lage zu wählen, die nicht innerhalb des normalen Fußbewegungsbereiches einer den Einstieg benutzenden Person liegt und sicherstellt, daß sie beim Kippen des Fahrerhauses und dem damit einhergehenden Mitkippen des im Einstieg 1 eingebauten Vorratsbehälters 6 nach oben in höchste Lage mitverschwenkt wird, somit auch kein Flüssigkeitsaustritt aus dem Vorratsbehälter eintreten kann. Im dargestellten Ausführungsbeispiel ist hierzu der Füllstutzen 23 sehr nahe zur hinteren Seitenwand 5 des Einstiegskastens hingerückt am Vorratsbehälter 6 angeordnet. Diese weit nach hinten gerückte Anordnung des Füllstutzens 23 hat zudem den Vorteil, daß anstelle eines teuren, komplizierten Verschlusses, ein einfacher Deckel 24, zum Beispiel eine Plastikkappe, als Verschluß verwendet werden kann.

## Patentansprüche

1. Einstieg zum Fahrerhaus eines Lastkraftwagens mit integriertem Vorratsbehälter für eine zur Windschutzscheiben- und/oder Scheinwerfer-Reinigung dienende Flüssigkeit, dadurch gekennzeichnet, daß der Vorratsbehälter (6) stehend oberhalb einer Trittstufe (3) im Einstiegkasten , zumindest größtenteils dessen Rückwand bildend, eingebaut und dessen an höchster Stelle weit nach hinten zur hinteren Einstiegkasten-Seitenwand (5) hin durch einen einfachen Deckel (24) verschließbare Füllöffnung von der Außenseite des Einstieges (1) her für Füllvorgänge zugänglich angeordnet ist.

2. Einstieg nach Anspruch 1, dadurch gekennzeichnet, daß der Vorratsbehälter (6) in Einbaulage zumindest teilweise in eine zur Fahrzeugmitte hin gerichtete Ausbuchtung (7) der Einstiegkasten-Rückwand (4) hineinragt.

3. Einstieg nach Anspruch 2, dadurch gekennzeichnet, daß der Vorratsbehälter (6) mit einem Teil (8) seiner Unterseite formschlüssig an der Bodenfläche (9) der Ausbuchtung (7), welche mit deren Rückwand (10) einen stumpfen Winkel von etwa 60 bis 80° einschließt, abgestützt ist.

4. Einstieg nach einem der vorhergehenden Ansprüche, dadurch gekennzeichnet, daß der Vorratsbehälter (6) mit seiner - in Fahrtrichtung vorwärts gesehen - rückwärtigen Seitenwand (13) etwa parallel verlaufend zur hinteren Seitenwand (5) des Einstiegkastens, an dieser angrenzend, abgestützt ist.

5. Einstieg nach einem der Ansprüche 2 und 3, dadurch gekennzeichnet, daß zwischen Trittstufe (3) des Einstiegkastens und Bodenfläche (9) der Ausbuchtung (7) ein verbindender Vertikalabschnitt (14) der Rückwand (4) solcher Höhe gegeben und der aus der Ausbuchtung (7) herausragende freie Teil (15) der Vorratsbehälter-Unterseite so schräg nach oben außen gerichtet ist, daß ein genügend großer, im Querschnitt trapezförmiger Raum für das Einführen der Spitze eines Schuhs einer den Einstieg betretenden Person gegeben ist.

6. Einstieg nach Anspruch 1, dadurch gekennzeichnet, daß die Rückwand (16) des Vorratsbehälters (6) eine Einbuchtung (17) aufweist, in der eine die Reinigungsflüssigkeit zu den Reinigungsstellen am Fahrzeug fördernde elektrische Pumpe (18) eingebaut ist.

7. Einstieg nach einem der vorhergehenden Ansprüche, dadurch gekennzeichnet, daß der Vorratsbehälter (6) an seiner der Außenseite des Einstieges (1) zugewandten Außenwand (20) mit einer Füllstandsanzeige (21) ausgebildet bzw. ausgestattet ist, anhand welcher der aktuelle Flüssigkeitspegel permanent von der Außenseite des Einstieges (1) her erkennbar ist.

8. Einstieg nach Anspruch 1, dadurch gekennzeichnet, daß die Füllöffnung des Vorratsbehälters (6) an höchster Stelle eines Füllstutzens (23) gegeben ist, der nahe der hinteren Seitenwand (5) des Einstiegkastens an der Oberseite (22) des Vorratsbehälters (6) schräg nach oben zur Außenseite des Einstieges (1) hin abgehend angeordnet ist.

## Claims

1. Entry to the cab of a truck with integrated reservoir for a fluid for cleaning the windscreen and/or the headlights, characterised in that the reservoir (6) is installed vertically above a step (3) in the entry box and forms a large portion of the rear wall of said entry box and that the filler hole of said reservoir is located at the topmost position very far in the rear towards the rear side wall (5) of the entry box and can be closed with a simple cap (24) and is accessible for filling operations from the outside of the entry (1).

2. Entry according to Claim 1, characterised in that in its installation position the reservoir (6) extends at least partially into the rear wall (4) of the entry box where said rear wall is recessed (7) towards the centre of the vehicle.

3. Entry according to Claim 2, characterised in that a part (8) of the bottom side of the reservoir (6) is positively supported on the bottom face (9) of the recessed portion (7) which forms an obtuse angle of approximately 60° to 80° with the rear wall (10) of said recessed portion (7).

4. Entry according to one of the foregoing Claims, characterised in that the rear side wall (13) (as viewed in forward driving direction) of the reservoir (6) runs approximately parallel to, is adjacent to and supported on the rear side wall (5) of the entry box.

5. Entry according to one of the Claims 2 and 3, characterised in that between the step (3) of the entry box and the bottom area (9) of the recessed portion (7) a connecting vertical portion (14) of the rear wall (4) has such a height and that that portion (15) of the reservoir bottom side which freely protrudes from the recessed portion (7) points upwards and outwards at such an oblique angle that a sufficiently large space of trapezoidal cross section is provided for the insertion of the tip of a shoe of a person stepping on the entry step.

6. Entry according to Claim 1, characterised in that the rear wall (16) of the reservoir (6) is provided with an inward recess (17) in which an electric pump (18) is installed for supplying cleaning fluid to the cleaning points on the vehicle.

7. Entry according to one of the foregoing Claims, characterised in that on its outer wall (20) facing the outside of the entry (1) the reservoir (6) is provided with fluid level indicator (21) at which the actual fluid level can be permanently read off from the outside of the entry (1).

8. Entry according to Claim 1, characterised in that the filler hole of the reservoir (6) is located at the topmost point of a filler neck (23) which is positioned close to the rear side wall (5) of the entry box on the upper side (22) of the reservoir (6) and leads upwards at an oblique angle towards the outside of the entry (1).

## Revendications

1. Accès à la cabine de conducteur d'un camion, comportant un réservoir de stockage intégrée pour un liquide servant au nettoyage des glaces, du pare-brise et/ou des phares, accès caractérisé en ce que
le réservoir de stockage (6) est installé debout au dessus d'une marche (3) dans le caisson d'accès, en formant au moins la majeure partie de la paroi arrière de celui-ci, tandis que l'ouverture de remplissage du réservoir, pouvant être fermée par un simple couvercle (24), est disposée à l'emplacement le plus élevé, loin en arrière vers la paroi latérale arrière (5) du caisson d'accès, et est accessible de l'extérieur de l'accès pour les processus de remplissage.

2. Accès selon la revendication 1,
caractérisé en ce que
le réservoir de stockage (6), dans sa position d'installation, pénètre au moins partiellement dans un emboutissage (7), dirigé vers le milieu du véhicule, de la paroi arrière (4) du caisson d'accès.

3. Accès selon la revendication 2,
caractérisé en ce que
le réservoir de stockage (6), par une partie (8) de son côté inférieur, prend appui avec interpénétration de formes sur la surface de fond (9) de l'emboutissage (7), laquelle délimite avec la paroi arrière (10) de l'emboutissage un angle obtus d'environ 60° à 80°.

4. Accès selon l'une des précédentes revendications,
caractérisé en ce que
le réservoir de stockage (6), par sa paroi latérale arrière (13) - vue en avant dans la direction de marche - est accoté à la paroi latérale arrière (5) du caisson d'accès s'étendant à peu près parallèlement à la paroi (13) et lui étant contiguë.

5. Accès selon l'une des revendications 2 et 3,
caractérisé en ce qu'
entre la marche (3) du caisson d'accès et la surface de fond (9) de l'emboutissage (7) est prévu un tronçon vertical de liaison (14) de hauteur suffisante de la paroi arrière (4), et la partie libre (15) du côté inférieur du réservoir de stockage, faisant saillie hors de l'emboutissage (7), est orientée vers le haut et vers l'extérieur de façon à ménager un espace de section transversale trapézoïdale suffisamment grand pour permettre l'introduction de la pointe d'une chaussure d'une personne utilisant l'accès.

6. Accès selon la revendication 1,
caractérisé en ce que
la paroi arrière (16) du réservoir de stockage (6) comporte un emboutissage (17) dans lequel est installée une pompe électrique (18) refoulant le liquide de nettoyage vers les emplacements de nettoyage dans le véhicule.

7. Accès selon l'une des précédentes revendications,
caractérisé en ce que
le réservoir de stockage (6), sur sa paroi extérieure (20) tournée vers la sortie de l'accès (1), est réalisé ou équipé avec une indication de niveau (21) à l'aide de laquelle le niveau actuel du liquide peut être en permanence repéré à partir de l'extérieur de l'accès.

8. Accès selon la revendication 1,
caractérisé en ce que
l'ouverture de remplissage du réservoir de stockage (6) est prévue à l'emplacement le plus élevé d'une tubulure de remplissage (23) qui est disposée au voisinage de la paroi latérale arrière (5) du caisson d'accès sur le côté supérieur (22) du réservoir de stockage (6), en partant obliquement vers le haut et vers l'extérieur de l'accès (1).
